# FASCICULE DE BREVET EUROPEEN

(11) **EP 0 538 962 B1**
(45) Date de publication et mention de la délivrance du brevet: **20.11.1996**
(21) Numéro de dépôt: 92203272.7
(22) Date de dépôt: 26.10.1992
(51) Int. Cl.: B62D 6/04, B62D 5/30, F15B 15/26, B62D 5/22

(54) **Dispositif de braquage de roues directrices d'un véhicule**
Lenkvorrichtung für die Lenkräder eines Fahrzeuges
Steering device for the steerable wheels of a vehicle

(30) Priorité: 25.10.1991 FR 9113184
(43) Date de publication de la demande: 28.04.1993
(73) Titulaire: REGIE NATIONALE DES USINES RENAULT S.A., 92109 Boulogne Billancourt (FR)
(72) Inventeur: Noufel, Gilbert, Régie Nat. des Usines Renault, F-92109 Boulogne-Billancourt (FR); Forte, Jean-Pierre, Régie Nat. des Usines Renault, F-92109 Boulogne-Billancourt (FR)
(74) Mandataire: Ernst-Schonberg, Michel

(56) Documents cités:
- EP-A- 0 379 430
- DE-A- 3 113 894
- DE-A- 3 707 046
- DE-A- 3 811 225
- DE-A- 3 907 780
- US-A- 4 540 059

## Description

L'invention concerne un dispositif de braquage des roues directrices d'un véhicule du genre où une barre de direction est associée à des moyens de déplacement axial relatif, par pression de fluide hydraulique, de ladite barre par rapport à un moyen-support intermédiaire lui-même monté à déplacement mécanique asservi au volant de direction, parallèlement à ladite barre, et à un moyen de solidarisation capable de maintenir les positions relatives de ladite barre et du moyen-support en cas de chute anormale de la pression. Ce type de commande de braquage de roues, illustré notamment par la publication EP 0 379 430 assure la superposition de deux mouvements de translation, l'un mécanique, asservi à la position du volant, l'autre hydraulique aboutissant aux biellettes des roues directrices. Il permet de faire varier l'effet de braquage du volant de direction en fonction de certaines conditions de route du véhicule.

Le système de correction de braquage décrit dans cette publication est équipé d'un système de mise en position moyenne de la barre de direction comportant un ressort de rappel, dont le tarage est suffisant pour maintenir en position la barre de direction vis-à-vis d'une barre de liaison parallèle à celle-ci, en cas de défaillance de la pression hydraulique de commande de correction de braquage. Selon cette publication, le ressort de rappel exerce en permanence son effet de centrage, de sorte que la correction du braquage n'est autorisée que si la pression en question exerce un effort axial supérieur au seuil de tarage du ressort.

La présente invention vise à associer à un dispositif de commande de braquage des roues motrices d'un véhicule, un mécanisme de sécurité qui présente notamment :
- une passivité complète en fonctionnement normal du système hydraulique ;
- une faible course d'action ;
- un faible encombrement ;
- un pilotage hydraulique basse pression ;
- une mise en action mécanique ;
- une résistance importante aux efforts axiaux ;
- une tendance aussi faible que possible à provoquer un endommagement de surface de la barre de direction.

Elle concerne un dispositif de commande de braquage des roues directrices d'un véhicule, du genre où une barre de direction est associée à des moyens de déplacement axial relatif, par pression de fluide hydraulique, de ladite barre par rapport à un moyen-support intermédiaire lui-même monté à déplacement mécanique asservi au volant de direction parallèlement à ladite barre et à un moyen de solidarisation capable de maintenir les positions relatives de ladite barre et du moyen-support en cas de chute anormale de la pression. Ce dispositif est caractérisé en ce que le moyen de solidarisation est normalement maintenu en position inactive de libération de la barre de direction par rapport au moyen-support intermédiaire par la pression dudit fluide s'exerçant contre l'action d'un ressort, alors qu'il interdit tout mouvement relatif entre la barre et le moyen-support dès qu'une chute anormale de pression se produit.

Selon une forme de réalisation préférée, le moyen de solidarisation est une bague en matériau déformable engagée à faible jeu autour de la barre de direction, présentant une face d'écrasement associée à un moyen de compression de ladite bague assurant un enserrement à friction de ladite bague autour de la barre de direction.

Avantageusement, la bague de déformation est associée à un moyen de déformation par écrasement sous l'action d'une pièce mobile à faible jeu depuis une position inopérative vers une position opérative sous l'action d'un ressort de compression armé en position inopérative par l'effet antagoniste de la pression hydraulique. Le moyen de déformation par écrasement de la bague est de préférence un piston à chambrage de réception d'un fluide, hydraulique associé à un ressort de compression antagoniste. Le piston constitue lui-même un moyen d'écrasement de la bague et présente à cet effet une portée interne tronconique coopérant avec une face externe également tronconique de la bague.

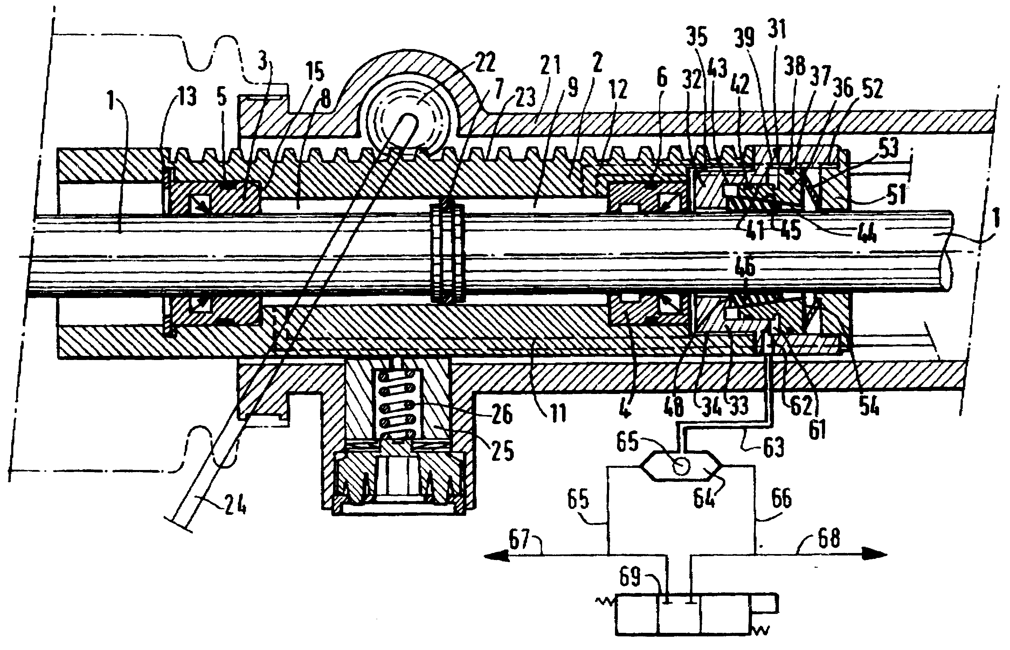

Les caractéristiques de l'invention ressortiront d'ailleurs de la description qui suit, à titre d'exemple, en référence au dessin annexé qui est une vue en coupe axiale partielle d'un dispositif de braquage de roue, avec une représentation schématique du circuit hydraulique de sécurité.

En se référant au dessin, une barre de direction 1, en prise à ses extrémités avec des biellettes de direction, est montée à coulissement axial dans un manchon 2 grâce à deux paliers 3 et 4 à joints d'étanchéité 5 et 6, et comporte une partie annulaire formant piston 7, délimitant deux compartiments de vérin hydraulique 8 et 9 alimentés en fluide hydraulique par des conduits 11 et 12.

Le manchon 2 est lui-même engagé librement à l'intérieur d'un boîtier 21 et sa position axiale dans le boîtier 21 peut être modifiée par une transmission mécanique du type à pignon 22 monté dans le boîtier 21, en prise avec une crémaillère 23 usinée le long du manchon 2, la rotation du pignon 22 étant elle-même assurée par une timonerie de direction 24. Un poussoir 25 à ressort 26 assure la prise permanente de la crémaillère 23 avec le pignon 22.

La barre de direction 1 est elle-même associée à un dispositif de solidarisation de sécurité avec le manchon 2, qui comprend un boîtier cylindrique 31 avec un corps de boîtier 32, dont une partie de fond restreinte 33 est vissée en 34 dans un dégagement d'extrémité 35 du manchon 2. Ce boîtier 31 incorpore un piston annulaire 36 ayant une portée de coulissement externe 37 à joint d'étanchéité 38 coopérant avec une portée cylindrique interne 39 du corps de boîtier 32 et une seconde partie de coulissement 41 à joint d'étanchéité 42 coopérant avec une partie cylindrique interne 43, de plus faible diamètre, de la partie restreinte 33 du corps de boîtier 32.

Côté interne, le piston annulaire 36 présente un dégagement axial 44 de dimension suffisante pour assurer un passage libre de la barre 1. Le dégagement axial 44 du piston annulaire 36 est de forme tronconique, formant rampe d'appui sur une portée externe également tronconique 45 d'une bague 46 en matière abrasive déformable qui présente, en l'absence de toute déformation, un diamètre interne légèrement supérieur au diamètre de la barre de direction 1.

Entre le piston annulaire 36 et un couvercle de boîtier 51 vissé en 52, est monté un ressort de compression axial 53 sous forme d'une rondelle tronconique en métal-ressort, dont la partie évasée prend appui sur une face frontale 54 du piston annulaire 36.

Entre le joint 38 de la portée de coulissement 37 et le joint 42 de la portée de coulissement 41 du piston 36 d'une part et le corps de boîtier 32 d'autre part existe donc une chambre annulaire 61 qui est raccordée via un perçage radial 62 du corps de boîtier 32 à une conduite d'alimentation en fluide hydraulique 63 à partir d'un boîtier distributeur de fluide hydraulique sous pression 64 à clapet anti-retour 65, lui-même alimenté par des conduites de dérivation 65 et 66 branchées sur des conduites 67 et 68 reliant une servo-valve 69 aux conduits 11 et 12 d'alimentation des compartiments 8 et 9 pour exercer une force de translation sur le piston 7 de la barre 1.

Le fonctionnement du dispositif de braquage décrit ci-dessus est le suivant :
En marche normale, le déplacement axial commandant l'orientation des roues directives du véhicule résulte de la superposition de deux déplacements de translation, à savoir d'abord un déplacement mécanique relatif du manchon 2 à crémaillère 23 par rapport au boîtier 21 solidaire de la structure du véhicule, d'autre part un déplacement hydraulique relatif de la barre de direction 1 par rapport au manchon 2 sous l'effet des pressions différentielles de fluide hydraulique dans les compartiments de vérin 8 et 9.

La pression de fluide hydraulique parvient, dès la première mise en marche du système hydraulique, dans le chambrage 61 via la conduite 63 et l'une ou l'autre des conduites 65, 66 alimentant l'un ou l'autre des compartiments 8 ou 9. Cette pression est suffisante pour contrebalancer l'effet axial antagoniste du ressort 53, de sorte que le piston annulaire 36 n'exerce aucune force sur la bague-frein 46, si bien que le mouvement de la barre de direction 1 par rapport au manchon 2 à crémaillère 23 est exclusivement dépendant des pressions du fluide hydraulique dans les compartiments 8 et 9. La pression du fluide hydraulique dans le chambrage 61 est maintenue en permanence, car aucune sortie de fluide n'est autorisée du fait de la présence des joints 38 et 42 et du clapet anti-retour. Le fluide hydraulique agit donc via le piston 36 comme un agent d'armement du ressort 53 en position d'attente à l'état comprimé.

En cas de défaillance du système hydraulique se traduisant par une chute de la pression hydraulique simultanément dans les deux conduites 65 et 66 -ce qui en régime normal ne se produit jamais car au moins une des conduites 65 ou 66 est toujours sous pression hydraulique-le fluide s'échappe du chambrage 61 et le ressort 53 assure immédiatement, via le piston 36, le serrage compressif de la bague 46, donc sa solidarisation par sa paroi interne 48 avec la barre de direction 1, donc avec le boîtier 31 et par là-même avec le manchon 2 formant cylindre de vérin hydraulique. Tout mouvement de translation entre barre de direction 1 et manchon 2 à crémaillère 23 -qui en l'absence de la pression du fluide hydraulique se traduirait par une liberté axiale de la barre 1 par rapport au manchon 2- est désormais interdit, de sorte que le braquage des roues obéit à la seule commande mécanique pignon 22-crémaillère 23.

Après remise en état du système hydraulique et, le cas échéant, de la barre de direction 2 (dont la face externe a pu être rayée, ce qui risquerait de provoquer des fuites inadmissibles de fluide hydraulique au niveau du joint 6), on provoque à nouveau une désolidarisation de la barre de direction 1 et du manchon 2 à crémaillère 23 lors d'une première mise sous pression.

## Revendications

1. Dispositif de commande de braquage des roues directrices d'un véhicule, du genre où une barre de direction (1) est associée à des moyens de déplacement axial relatif, par pression de fluide hydraulique, de ladite barre (1) par rapport à un moyen-support intermédiaire (2) lui-même monté à déplacement mécanique (22, 23) asservi (24) au volant de direction parallèlement à ladite barre (1), et à un moyen de solidarisation (46) capable de maintenir les positions relatives de ladite barre (1) et du moyen-support en cas de chute anormale de la pression, caractérisé en ce que le moyen de solidarisation (46) est normalement maintenu en position inactive de libération de la barre de direction (1) par rapport au moyen-support intermédiaire (2) par la pression dudit fluide s'exerçant contre l'action d'un ressort, alors qu'il interdit tout mouvement relatif entre la barre (1) et le moyen-support (2) dès qu'une chute anormale de pression se produit.

2. Dispositif de commande de braquage des roues directrices d'un véhicule selon la revendication 1, caractérisé en ce que le moyen de solidarisation est une bague en matériau déformable (46) engagée librement à faible jeu autour de la barre de direction (1) et présentant une face d'écrasement (45) associée à un moyen de compression (36) de ladite bague (46) assurant un enserrement à friction de ladite bague (46) autour de la barre de direction (1).

3. Dispositif de commande de braquage des roues directrices d'un véhicule, selon la revendication 2, caractérisé en ce que ladite bague de déformation (46) est associée à un moyen de déformation par écrasement sous l'action d'une pièce mobile à faible jeu depuis une position inopérative vers une position opérative sous l'action d'un ressort de compression armé en position inopérative par l'effet antagoniste de la pression hydraulique.

4. Dispositif de commande de braquage de roues selon la revendication 3, caractérisé en ce que le moyen de déformation par écrasement de la bague (46) est un piston (36) à chambrage (61) de réception d'un fluide hydraulique associé à un ressort antagoniste (53).

5. Dispositif de commande braquage des roues directrices d'un véhicule, selon l'une quelconque des revendications 2 à 4, caractérisé en ce que le piston constitue lui-même un moyen d'écrasement de la bague (46) et présente à cet effet une portée interne tronconique (44) coopérant avec une face externe également tronconique (45) de la bague (46).

## Claims

1. Device for controlling the turning of the steered wheels of a vehicle of the type wherein a steering rod (1) is assocatied with means for relative axial displacement by hydraulic fluid pressure of said rod (1) with respect to an intermediate support means (2) which is itself mounted for mechanical displacement (22, 23) under the control (24) of the steering wheel, parallel to said rod (1), and with a fixing means (46) capable of maintaining the relative positions of said rod (1) and of the support means in the case of an abnormal drop in pressure, characterised in that the fixing means (46) is normally kept in an inactive position where the steering rod (1) is free with respect to the intermediate support means (2) as a result of the pressure of said fluid working against the action of a spring, but it prevents any relative movement between the rod (1) and the support means (2) as soon as an abnormal drop in pressure occurs.

2. Device for controlling the turning of the steered wheels of a vehicle according to claim 1, characterised in that the fixing means is a ring (46) of deformable material engaged freely with slight clearance about the steering rod (1) and having a crushable face (45) associated with a means (36) for compressing said ring (46), providing for frictional gripping of said ring (46) about the steering rod (1).

3. Device for controlling the turning of the steered wheels of a vehicle according to claim 2, characterised in that the said deformation ring (46) is associated with a means for deformation by crushing under the action of an element moveable with a slight clearance from an inoperative position to an operative position under the action of a compression spring armed in an inoperative position by the opposing effect of the hydraulic pressure.

4. Device for controlling the turning of the steered wheels of a vehicle according to claim 3, characterised in that the means for deformation by crushing of the ring (46) is preferably a piston (36) with a chamber (61) for receiving a hydraulic fluid associated with an opposing spring (53).

5. Device for controlling the turning of the steered wheels of a vehicle according to any one of claims 2 to 4, characterised in that the piston itself forms a means for crushing the ring (46) and for this purpose has an internal frustoconical bearing surface (44) cooperating with an external face (45), which is also frustoconical of the ring (46).

## Patentansprüche

1. Steuerbare Lenkvorrichtung für die gelenkten Räder eines Fahrzeugs, bei der eine Lenkspindelschubstange (1) einer Anordnung zur relativen Axialverschiebung zugeordnet ist, mittels hydraulischer Fluidbeaufschlagung der Stange (1) bezüglich einer Zwischenhalterung (2), die wiederum parallel zur Stange (1) mechanisch verschiebbar (22, 23) unter der Einwirkung (24) des Lenkrades angeordnet ist, und einer Feststellanordnung (46) zugeordnet ist, zur Einhaltung der Relativstellungen der Stange (1) und der Halterung im Fall eines anomalen Druckabfalls, dadurch gekennzeichnet, daß die Feststellanordnung (46) normalerweise in ihrer inaktiven Stellung der Freigabe der Lenkspindelschubstange (1) gehalten wird, bezüglich der Zwischenhalterung (2) aufgrund des gegen die Kraft einer Feder wirkenden Fluiddrucks, während sie jegliche Relativbewegung zwischen der Stange (1) und der Halterung (2) bei Auftritt eines anomalen Druckabfalls unterbindet.

2. Steuerbare Lenkvorrichtung für die gelenkten Räder eines Fahrzeugs nach Anspruch 1, dadurch gekennzeichnet, daß die Feststellanordnung ein Ring (46) aus verformbarem Material ist, der frei und mit geringem Spiel auf der Lenkspindelschubstange (1) angeordnet ist und der eine Quetschfläche (45) aufweist, die einer Druckanordnung (36) für den Ring (46) zugeordnet ist, welche einen Klemmsitz des Ringes (46) auf der Lenkspindelsbhubsstange (1) gewährleistet.

3. Steuerbare Lenkvorrichtung für die gelenkten Räder eines Fahrzeugs nach Anspruch 2, dadurch gekennzeichnet, daß der verformbare Ring (46) einer Anordnung zur Verformung mittels Quetschung zugeordnet ist, die unter der Einwirkung eines mit geringem Spiel beweglichen Teils steht, ausgehend von einer unwirksamen Stellung in eine wirksame Stellung unter der Einwirkung einer in Richtung der unwirksamen Stellung durch den entgegengesetzten Einfluß des Hydraulikdrucks beaufschlagten Druckfeder.

4. Steuerbare Lenkvorrichtung für Räder nach Anspruch 3, dadurch gekennzeichnet, daß die Anordnung zur Verformung mittels Quetschung des Ringes (46) ein Kolben (36) mit einer Senkung (61) zur Aufnahme eines Hydraulikfluids ist, der einer entgegenwirkenden Feder (53) zugeordnet ist.

5. Steuerbare Lenkvorrichtung für die gelenkten Räder eines Fahrzeugs nach einem der Ansprüche 2 bis 4, dadurch gekennzeichnet, daß der Kolben selbst eine Anordnung zur Quetschung des Ringes (46) bildet und zu diesem Zweck einen inneren kegelstumpfförmigen Anschlag (44) aufweist, der mit einer ebenfalls kegelstumpfförmigen äußeren Fläche (45) des Ringes (46) zusammenwirkt.
